# EUROPÄISCHE PATENTSCHRIFT

(11) **EP 0 972 171 B1**
(45) Veröffentlichungstag und Bekanntmachung des Hinweises auf die Patenterteilung: **29.10.2003**
(21) Anmeldenummer: 98912457.3
(22) Anmeldetag: 07.03.1998
(51) Int. Cl.: G01F 1/66

(54) **ULTRASCHALLDURCHFLUSSMESSER IN KOMPAKTER BAUFORM**
COMPACT ULTRASONIC FLOWMETER
DEBITMETRE ULTRASONORE SOUS FORME COMPACTE

(30) Priorität: 01.04.1997 DE 19713526
(43) Veröffentlichungstag der Anmeldung: 19.01.2000
(73) Patentinhaber: ELSTER GmbH, 55252 Mainz-Kastel (DE)
(72) Erfinder: GOERTZ, Bernhard, D-65191 Wiesbaden (DE); WETZEL, Volker, D-55299 Nackenheim (DE)
(74) Vertreter: Harlacher, Mechthild, Dipl.-Ing.
(86) Internationale Anmeldenummer: EP9801348
(87) Internationale Veröffentlichungsnummer: WO98044318

(56) Entgegenhaltungen:
- EP-A- 0 715 155
- DE-A- 19 549 162
- DE-A- 19 632 165
- US-A- 4 004 461
- US-A- 4 425 526
- US-A- 5 440 936
- PATENT ABSTRACTS OF JAPAN vol. 010, no. 324 (P-512), 5.November 1986 & JP 61 132823 A (TOKYO KEIKI CO LTD), 20.Juni 1986,

## Beschreibung

Die Erfindung betrifft eine Vorrichtung zur Ultraschall-Durchflußmessung eines strömenden Fluids, also eines strömenden Gases oder einer strömenden Flüssigkeit, mit
- einer Gehäuseanordnung, deren Gehäusekörper mit seinen Stirnseiten in eine Fluidleitung einbaubar ist und mit seiner Innenwand ein Meßrohr bildet,
- mindestens zwei Ultraschallwandlern, die an der Innenwand des Gehäusekörpers angeordnet sind und einen durch das Meßrohr führenden Schallpfad definieren, und
- Anschlußleitungen für die Ultraschallwandler, die durch Druckdurchführungen hindurch aus dem Meßrohr herausgegeführt sind.

Eine derartige Vorrichtung ist beispielsweise aus der US-A 5 440 936 bekannt. Vier Ultraschallwandler sind in Ausnehmungen im Gehäuse angeordnet und definieren einen x-förmigen Schallpfad.

Derartige Vorrichtungen haben sich in der Praxis bewährt. Die Anordnung des Schallpfades stellt eine Optimierung von zwei gegenläufigen Kriterien dar. Zum einen soll der Winkel, den der Schallpfad mit der Achse des Meßrohres bildet, möglichst klein sein, um die Zuverlässigkeit der Meßergebnisse zu erhöhen. Zum anderen soll sich der Schallpfad auf eine möglichst kleine axiale Erstreckung des Meßrohres beschränken, da sonst die ermittelte mittlere Geschwindigkeit durch Störungen der Strömung verfälscht wird.

Daraus resultiert die Forderung nach einem möglichst großen Winkel zwischen dem Schallpfad und der Achse des Meßrohres. Aus der Optimierung der beiden Kriterien ergibt sich die axiale Erstreckung des Schallpfades.

Hinzu kommt eine weitere Forderung, nämlich die nach einer möglichst geringen Baulänge der Vorrichtung. Hier greift die Erfindung ein, denn die ihr zugrunde liegende Aufgabe wird darin gesehen, einen möglichst kompakten Ultraschalldurchflußmesser von geringer Baulänge zu schaffen.

Zur Lösung dieser Aufgabe ist die Vorrichtung der eingangs genannten Art erfindungsgemäß dadurch gekennzeichnet,
- daß in der Innenwand des Gehäusekörpers, ausgehend von jeder Stirnseite, je mindestens eine Ausnehmung für einen der Ultraschallwandler ausgebildet ist,
- daß jede Stirnseite der Gehäuseanordnung für die Anschlußleitungen der Ultraschallwandler mindestens eine Nut aufweist, die die zugehörige Ausnehmung mit einer radial außerhalb des Meßrohres liegenden, von der zugehörigen Stirnseite ausgehenden Kammer verbindet, aus der die zugehörige Druckdurchführung herausführt, und
- daß auf jeder Stirnseite der Gehäuseanordnung eine Flanschscheibe befestigt ist, die die zugehörige Ausnehmung, Nut und Kammer überdeckt, wobei zwischen jeder Flanschscheibe und der zugehörigen Stirnseite ein O-Ring angeordnet ist, der radial außerhalb der zugehörigen Ausnehmung, Nut und Kammer um diese herumläuft.

Die Ultraschallwandler sind also direkt an den Stirnseiten des Gehäusekörpers angeordnet, so daß die Länge der Vorrichtung praktisch der axialen Erstreckung des Schallpfades entspricht und dementsprechend minimiert ist. Dabei lassen sich die Druckdurchführungen auf einen bestimmten Umfangsbereich der Gehäuseanordnung konzentrieren. Zusätzlicher Platzbedarf für die Anschlußleitungen der Ultraschallwandler ist nicht gegeben, da die Anschlußleitungen in stirnseitigen Nuten verlaufen. Auch benötigt die Abdichtung der Vorrichtung praktisch keinen zusätzlichen Raum. Dies gilt insbesondere dann, wenn die O-Ringnuten in den Stirnseiten der Gehäuseanordnung vorgesehen sind. Es bedarf dann lediglich der beiden Flanschscheiben, die an der Gehäuseanordnung befestigt sind und die Anpreßkraft für die O-Ringe liefern.

Die erfindungsgemäßen Vorteile werden unabhängig von der Anzahl und Anordnung der Schallpfade erzielt, also unabhängig von der Anzahl der benötigten Ultraschallwandler. Hervorzuheben ist ferner, daß die Ultraschallwandler keiner Druckdifferenz ausgesetzt sind, sondern allseitig mit Druck beaufschlagt werden.

Die Vorrichtung eignet sich für die Einklemmontage zwischen DIN und ANSI-Flanschen. Dabei werden Flanschdichtungen zwischen die Flansche und die Flanschscheiben eingelegt, woraufhin die Flansche zusammengespannt werden und dabei die Gehäuseanordnung einklemmen.

Ferner sei erwähnt, daß die Erfindung auf unterschiedliche Nennweiten anwendbar ist.

Vorzugsweise sind die von den Stirnseiten der Gehäuseanordnung ausgehenden Kammern in einem Gehäusehals angeordnet, an den sich ein Gehäusekopf anschließt, wobei die Druckdurchführungen im Gehäusehals zwischen den Kammern und dem Gehäusekopf angeordnet sind. Dies gewährleistet eine extrem kompakte Bauweise, wobei sämtliche Druckdurchführungen auf eine gemeinsame axiale Ebene konzentriert sind und im Gehäusekopf münden.

Dabei ist es ganz besonders vorteilhaft, daß die von den Stirnseiten der Gehäuseanordnung ausgehenden Kammern von einem durchgehenden Kanal miteinander verbunden sind. Dieser verläuft in axialer Richtung durch den Gehäusehals und mündet an beiden Stirnseiten radial innerhalb der O-Ringe, also im Druckraum. Neben fertigungstechnischen Vorteilen bietet der Kanal die Möglichkeit, im Gehäusehals weitere Druckdurchführungen für Druck- und Temperatursensoren anzuordnen, die über den Kanal mit dem Druckraum verbunden sind und in den Gehäusekopf hineinführen. Dieser enthält vorteilhafterweise eine Ansteuerungs- und Auswertelektronik für die Ultraschallwandler, an die jedoch auch die Druck- und Temperatursensoren angeschlossen sein können.

Letzteres bietet dann die Möglichkeit, eine thermodynamische Mengenzustandsumwertung an Ort und Stelle durchzuführen, und zwar in einem Ultraschalldurchflußmesser, der eine in sich geschlossene Baueinheit bildet und dementsprechend robust ist. Letzteres wirkt sich insbesondere bei industriellem Einsatz unter rauhen Bedingungen positiv aus.

Die Vorrichtung kann noch dadurch komplettiert werden, daß dem Gehäusekopf (optische) Datenschnittstellen (z.B. LED) sowie Bedien- und Anzeigeelemente (z.B. LCD) zugeordnet werden, wobei diese vorteilhafterweise an einer Kappe des Gehäusekopfes angeordnet sind. Bei den Schnittstellen kann es sich um Stecker und Buchsen handeln, die der Energieversorgung und/oder dem Datentransfer dienen.

Eine besonders einfache Montage und Ausrichtung der Ultraschallwandler wird dadurch erzielt, daß in jede der in der Innenwand des Gehäusekörpers ausgebildeten Ausnehmungen von der zugehörigen Stirnseite aus ein Halter eingesteckt ist, der den zugehörigen Ultraschallwandler aufnimmt. Die Halter bestehen vorteilhafterweise aus schallabsorbierendem Material, vorzugsweise aus Gummi, um die Ultraschallwandler akustisch zu entkoppeln.

Unter Umständen ist es erwünscht, die eintretende Strömung des Fluids aufzubereiten. Hierfür besteht eine besonders einfache Möglichkeit darin, die Flanschscheiben als Strömungsgleichrichter auszubilden.

Die Erfindung richtet sich ferner auf eine Gehäuseanordnung für eine Vorrichtung zur Ultraschalldurchflußmessung eines strömenden Fluids, mit einem Gehäusekörper, der mit seinen Stirnseiten in eine Fluidleitung einbaubar ist und mit seiner Innenwand ein Meßrohr bildet, wobei die Innenwand des Gehäusekörpers Einrichtungen zur Aufnahme von mindestens zwei Ultraschallwandlern aufweist, die einen Schallpfad definieren, und wobei Öffnungen für Druckdurchführungen vorgesehen sind, durch die hindurch Anschlußleitungen der Ultraschallwandler aus dem Meßrohr herausführbar sind.

Diese Gehäuseanordnung ist erfindungsgemäß dadurch gekennzeichnet,
- daß die Einrichtungen zur Aufnahme der Ultraschallwandler Ausnehmungen aufweisen, die, ausgehend von den Stirnseiten des Gehäusekörpers, in dessen Innenwand angeordnet sind,
- daß jede Stirnseite der Gehäuseanordnung für die Anschlußleitungen der Ultraschallwandler mindestens eine Nut aufweist, die die zugehörige Ausnehmung mit einer radial außerhalb des Meßrohres liegenden, von der zugehörigen Stirnseite ausgehenden Kammer verbindet,
- daß die Öffnungen für die Druckdurchführungen aus diesen Kammern herausführen und
- daß in jeder Stirnseite der Gehäuseanordnung eine O-Ringnut angeordnet ist, die radial außerhalb der zugehörigen Ausnehmung, Nut und Kammer um diese herumläuft.

Diese Gehäuseanordnung bildet die Basis für die Erzielung der vorstehend diskutierten Vorteile, gegebenenfalls in Verbindung mit den Weiterbildungen der Erfindung nach den Unteransprüchen 16 bis 24.

Es wurde bereits darauf hingewiesen, daß die Erfindung auf unterschiedliche Schallpfade und unterschiedliche Schallpfadanordnungen anwendbar ist. Besonders hervorzuheben ist eine Anordnung, bei der vier Ultraschallwandler, die divergente Strahlenbündel aussenden, paarweise in einer gemeinsamen diagonalen Ebene des Meßrohres spiegelbildlich zueinander angeordnet sind, wobei eine fokussierende funktionale Reflexionsfläche zwischen den Ultraschallwandlern jedes Paares angeordnet ist. Ein derartiger Ulraschalldurchflußmesser ist Gegenstand der nicht vorveröffentlichten Deutschen Patentanmeldung 196 32 165.4. Die divergenten Strahlenbündel erfassen den Querschnitt des Meßrohres zu mehr als 90% und ermöglichen eine Flächenintegration, aus der entsprechend genaue Meßwerte resultieren, und dies bei sehr effizienter Nutzung der abgestrahlten Schallenergie.

Dabei werden die funktionalen Reflexionsflächen, gesehen im Schnitt senkrecht zur Achse des Meßrohres, jeweils von einer Ellipse begrenzt, in deren Brennpunkten die Ultraschallwandler des zugehörigen Paares liegen. Selbst eine Gehäuseanordnung mit fokussierenden Reflexionsflächen läßt sich also, wie es ohnehin von großem Vorteil ist, im Strangpreßverfahren als einteiliger Körper herstellen. Das Ausgangsmaterial besteht aus Metall, so daß nicht nur die erforderliche Festigkeit und Robustheit gewährleistet ist, sondern daß auch eine vorzügliche elektromagnetische Abschirmung erzielt wird. Diese schützt einerseits das Meßgerät gegen Störeinstrahlung und verhindert andererseits Störungen der Umgebung durch das Meßgerät.

Die Erfindung wird im folgenden anhand eines bevorzugten Ausführungsbeispiels im Zusammenhang mit der beiliegenden Zeichnung näher erläutert. Die Zeichnung zeigt in:
- Figur 1: eine Explosionsdarstellung der Vorrichtung;
- Figur 2: eine Einzelheit (Pfeil II) aus Figur 1 in vergrößertem Maßstab;
- Figur 3: einen axialen Schnitt durch die Vorrichtung;
- Figur 4: die zugehörige Kappe;
- Figur 5: eine gegenüber Figur 3 abgewandelte Ausführungsform.

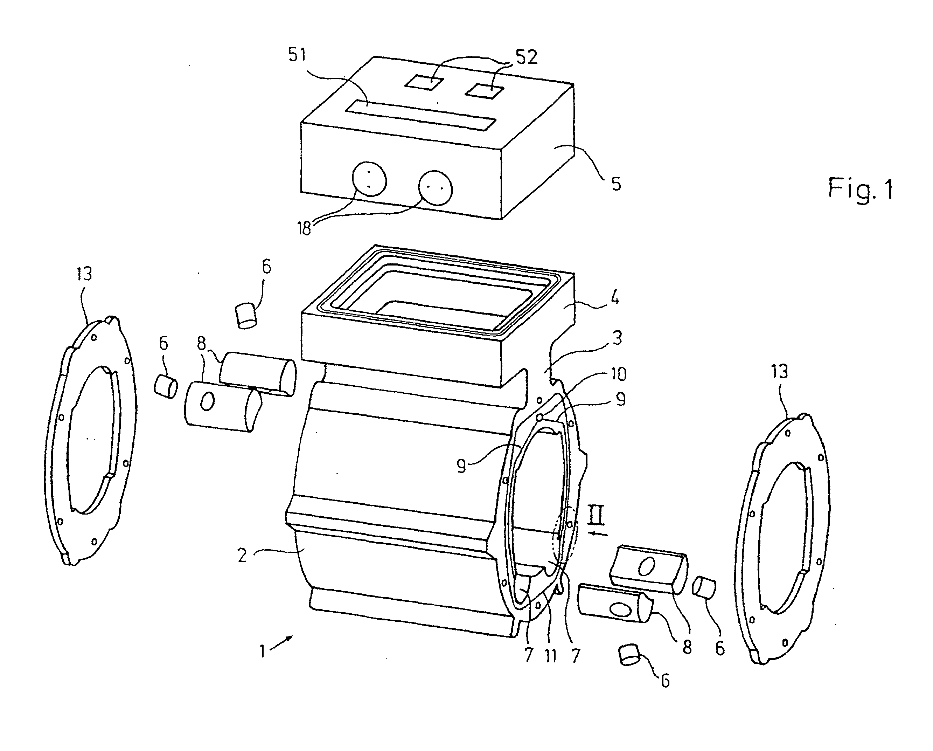

Nach Figur 1 weist die Vorrichtung eine Gehäuseanordnung 1 auf, die aus einem Gehäusekörper 2, einem Gehäusehals 3 und einem Gehäusekopf 4 besteht. Letzterer wird von einer Kappe 5 abgedeckt.

Der Gehäusekörper 2 bildet mit seiner Innenfläche ein Meßrohr, dem insgesamt vier Ultraschallwandler 6 zugeordnet sind. Diese definieren paarweise zwei Schallpfade, die spiegelbildlich zueinander in einer gemeinsamen diagonalen Ebene des Meßrohres verlaufen, wobei die Ultraschallwandler divergente Strahlenbündel aussenden, die an zugehörigen funktionalen Reflexionsflächen fokussiert werden. Die Mittellinie jedes Schallpfades bildet sowohl in einer Projektion senkrecht zur Achse des Meßrohres als auch in einer Projektion parallel zur Achse des Meßrohres eine Dreieckspitze (siehe die Deutsche Patentanmeldung 196 32 165.4). Mit den divergenten Strahlenbündeln werden mehr als 90% des Meßrohrquerschnitts erfaßt, so daß eine Flächenintegration mit entsprechend genauen Meßwerten möglich ist.

Die Gehäuseanordnung 1 weist eine geringe axiale Erstreckung auf. Diese ergibt sich daraus, daß die Ultraschallwandler 6 direkt an den Stirnseiten des Gehäusekörpers 2 angeordnet werden. Hierzu weist letzterer Ausnehmungen 7 auf, die, ausgehend von den Stirnseiten des Gehäusekörpers 2, in dessen Innenwand ausgebildet sind. Die Ausnehmungen 7 dienen zur Aufnahme von Haltern 8, in die die Ultraschallwandler 6 eingesteckt und damit positioniert sind.

Die Halter 8 bestehen aus Gummi und bewirken auf diese Weise eine akustische Entkoppelung der Ultraschallwandler 6.

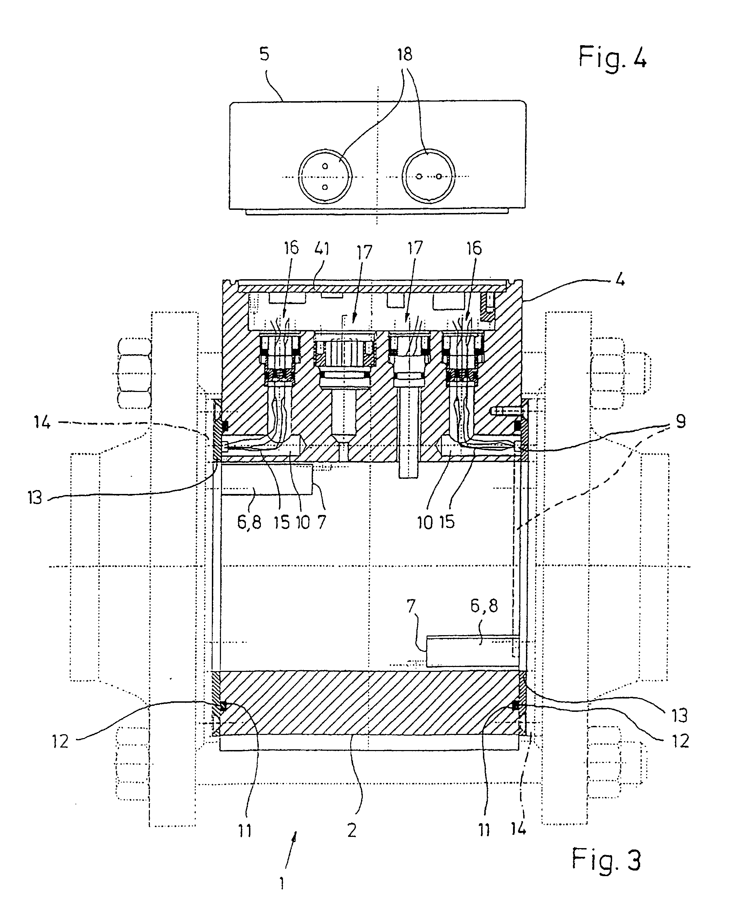

Jede Ausnehmung 7 ist über eine in der zugehörigen Stirnseite des Gehäusekörpers 2 ausgebildete Nut 9 an eine Kammer 10 angeschlossen, deren Funktion sich aus der späteren Beschreibung von Figur 3 ergibt.

Weiterhin ist in jeder Stirnseite des Gehäusekörpers 2 eine umlaufende Ringnut 11 ausgebildet, die radial außerhalb der Ausnehmungen 7, der Nuten 9 und der Kammer 10 verläuft. Sie dient zur Aufnahme eines O-Rings 12 (siehe Figur 3), der von einer zugehörigen Flanschscheibe 13 unter Vorspannung gehalten wird.

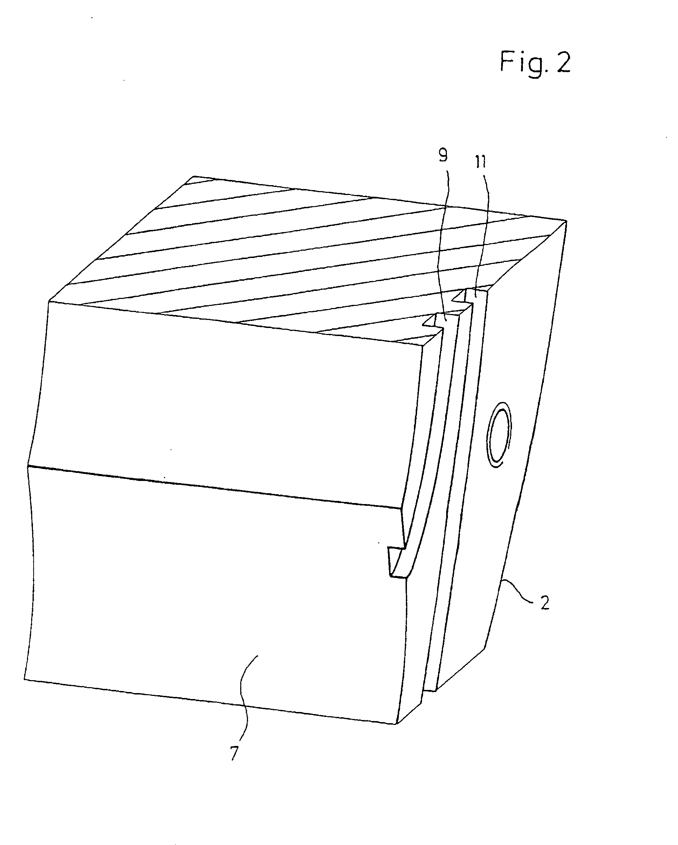

Aus den Figuren 1 bis 3 ergibt sich, daß die Gehäuseanordnung 1 mit dem Gehäusekörper 2, dem Gehäusehals 3 und dem Gehäusekopf 4 einteilig ausgebildet ist. Sie besteht aus Aluminium und wird im Strangpreßverfahren hergestellt. Es handelt sich also um eine sehr kompakte und robuste Baugruppe. Außerdem bildet das Aluminium eine elektromagnetische Abschirmung der Ultraschallwandler 6, so daß diese weder aus der Umgebung heraus gestört werden noch ihrerseits die Umgebung beeinflussen können. Letzteres gilt auch für die im Gehäusekopf und in der (vorzugsweise aus Metall bestehenden) Kappe angeordneten elektronischen Baugruppen.

Aus Figur 3 ergibt sich die Einbaulage der Vorrichtung. Die Gehäuseanordnung 1 ist unter Zwischenschaltung von Flanschdichtungen 14 zwischen zwei Flanschen einer Fluidleitung eingespannt.

Ferner ergibt sich aus Figur 3, daß die Abdichtung der Gehäuseanordnung 1 über den O-Ring 12 im Zusammenwirken mit der Flanschscheibe 13 erfolgt. Radial innerhalb des O-Rings 12 liegen die zugehörigen Ausnehmungen 7 für die Halter 8 und die Ultraschallwandler 6, ferner die Nuten 9 und schließlich die beiden Kammern 10. Die Kammern 10 sind also über die Nuten 9 an den Druckraum angeschlossen.

Jeder Ultraschallwandler 6 weist einen Satz von Anschlußleitungen 15 auf, die von den Ausnehmungen 7 aus durch die zugehörigen Nuten 9 in die Kammern 10 und von hier aus in zugehörige Druckdurchführungen 16 geleitet werden. Die Druckdurchführungen 16 befinden sich im Gehäusehals 3 zwischen den Kammern 10 und dem Gehäusekopf 4. Die Druckdurchführungen 16 liegen also in einer gemeinsamen axialen Ebene und tragen auf diese Weise dazu bei, die Gehäuseanordnung 1 zu einer kompakten Baugruppe zu gestalten.

Wie in den Figuren 1 bis 3 lediglich angedeutet, enthält der Gehäusekopf 4 samt Kappe 5 die gesamte Elektronik der Vorrichtung. Dies ermöglicht direkt am Meßort eine Mengenzustandsumwertung. Dargestellt sind in Figur 1 eine Öffnung 51 der Kappe 5 zur Aufnahme einer Sichtanzeige sowie Öffnungen 52 für Bedientasten. Ferner zeigt Figur 3 eine Platine 41, die in den Gehäusekopf 4 eingesetzt ist. Eine weitere, nicht dargestellte Platine befindet sich in der Kappe 5.

Auch die erforderlichen Schnittstellen für die Energieversorgung und für Datentransferfunktionen sind dem Gehäusekopf 4 samt Kappe 5 zugeordnet. Hier ist auf Figur 4 zu verweisen, die die Kappe 5 mit zwei Schnittstellen 18 zeigt.

Die Gehäuseanordnung incl. Kappe nimmt vollständig alle Komponenten wie Kammern, Ultraschallsensoren, Druck-, Temperatursensor, Verkabelung und die gesamte Elektronik zur Realisierung eines Durchflußmeßgeräts mit Schnittstellen und optionaler Mengenzustandsumwertung auf. D.h. es handelt sich um eine vollständige Meßeinheit. Auf dem Gehäusekopf und in der Kappe befindet sich jeweils eine Elektronikplatine. Kappe und Gehäusekopf bilden bei Metallausführung eine Schirmung um die ganze Elektronik. Ausschließlich Schnittstellen (LCD, Taste, Spannungsversorgung etc.) werden nach außen geführt.

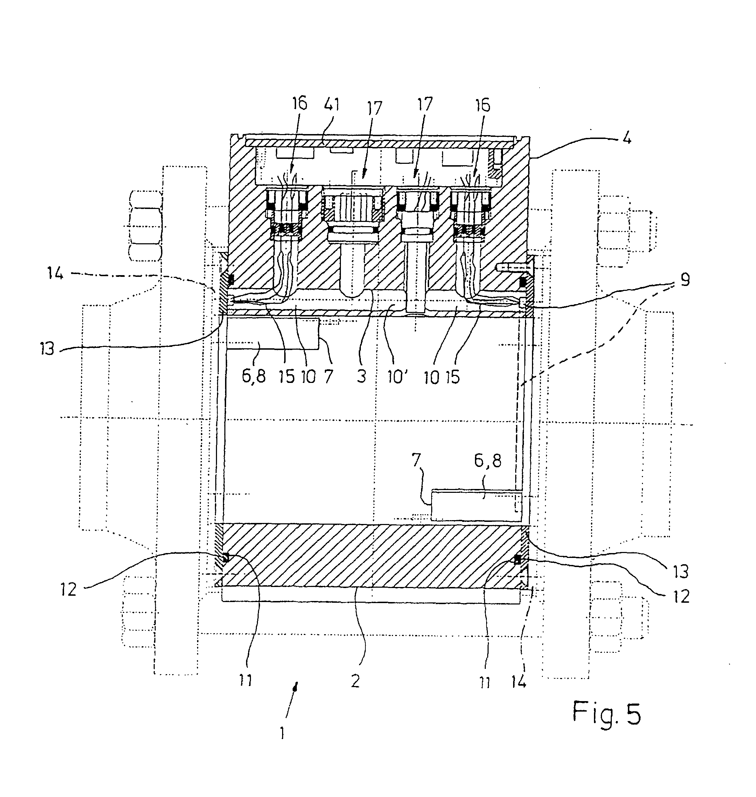

Die Ausführungsform nach Figur 5 unterscheidet sich von der nach den Figuren 1 bis 4 dadurch, daß die beiden Kammern 10 über einen durchgehenden Kanal 10' miteinander verbunden sind. Dieser Kanal 10' steht über die Kammern 10 mit dem Druckraum in Verbindung. Dies bietet die Möglichkeit, weitere Druckdurchführungen 17 vorzusehen, die die Montage eines Drucksensors bzw. eines Temperatursensors ermöglichen. Letztere sind bei der Ausführungsform nach den Figuren 1 bis 4 direkt an das Meßrohr angeschlossen.

Im Rahmen der Erfindung sind durchaus Abwandlungsmöglichkeiten gegeben. So gestattet die Vorrichtung die Anordnung abweichender Schallpfade, wenn auch das hier beschriebene Schallpfadmuster besonders vorteilhaft ist. Unter Umständen kann mit einem einzigen Paar von Ultraschallwandlern gearbeitet werden, so daß sich die Konstruktion der Stirnseiten der Gehäuseanordnung vereinfacht. Eine Vereinfachung läßt sich ferner dadurch erzielen, daß man auf die zusätzlichen Druckdurchführungen verzichtet und die Druck- und Temperatursensoren an anderer Stelle anordnet. Auch hier gilt allerdings, daß die dargestellte Ausführungsform besonders vorteilhaft ist.

## Patentansprüche

1. Vorrichtung zur Ultraschall-Durchflußmessung eines strömenden Fluids, also eines strömenden Gases oder einer strömenden Flüssigkeit, mit
- einer Gehäuseanordnung (1), deren Gehäusekörper (2) mit seinen Stirnseiten in eine Fluidleitung einbaubar ist und mit seiner Innenwand ein Meßrohr bildet,
- mindestens zwei Ultraschallwandlern (6), die an der Innenwand des Gehäusekörpers (2) angeordnet sind und einen durch das Meßrohr führenden Schallpfad definieren, und
- Anschlußleitungen (15) für die Ultraschallwandler (6), die durch Druckdurchführungen (16) hindurch aus dem Meßrohr herausgeführt sind
**dadurch gekennzeichnet,**
- **daß** in der Innenwand des Gehäusekörpers (2) ausgehend von jeder Stirnseite, je mindestens eine Ausnehmung (7) für einen der Ultraschallwandler (6) ausgebildet ist,
- **daß** jede Stirnseite der Gehäuseanordnung (1) für die Anschlußleitungen (15) der Ultraschallwandler (6) mindestens eine Nut (9) aufweist, die die zugehörige Ausnehmung (7) mit einer radial außerhalb des Meßrohrs liegenden, von der zugehörigen Stirnseite ausgehenden Kammer verbindet, aus der die zugehörige Druckdurchführung (16) herausführt, und
- **daß** auf jeder Stirnseite der Gehäuseanordnung (1) eine Flanschscheibe (13) befestigt ist, die die zugehörige Ausnehmung (7), Nut (9) und Kammer überdeckt, wobei zwischen jeder Flanschscheibe (13) und der zugehörigen Stirnseite ein O-Ring (12) angeordnet ist, der radial außerhalb der zugehörigen Ausnehmung (7), Nut (9) und Kammer um diese herumläuft.

2. Vorrichtung nach Anspruch 1, **dadurch gekennzeichnet, daß** die von den Stirnseiten der Gehäuseanordnung (1) ausgehenden Kammern in einem Gehäusehals (3) angeordnet sind, an den sich ein Gehäusekopf (4) anschließt, wobei die Druckdurchführungen (16) im Gehäusehals (3) zwischen den Kammern und dem Gehäusekopf (4) angeordnet sind.

3. Vorrichtung nach Anspruch 1 oder 2, **dadurch gekennzeichnet, daß** die von den Stirnseiten der Gehäuseanordnung (1) ausgehenden Kammern von einem durchgehenden Kanal (10) miteinander verbunden sind.

4. Vorrichtung nach Anspruch 3, **dadurch gekennzeichnet, daß** im Gehäusehals (3) zwischen dem Kanal (10) und dem Gehäusekopf (4) weitere Druckdurchführungen (17) für Druckund Temperatursensoren angeordnet sind.

5. Vorrichtung nach einem der Ansprüche 2 bis 4, **dadurch gekennzeichnet, daß** im Gehäusekopf (4) eine Ansteuerungsund Auswertelektronik angeordnet ist.

6. Vorrichtung nach Anspruch 5, **dadurch gekennzeichnet, daß** dem Gehäusekopf (4) Schnittstellen (18) sowie Bedienund Anzeigeelemente zugeordnet sind.

7. Vorrichtung nach Anspruch 6, **dadurch gekennzeichnet, daß** die Schnittstellen (18) sowie die Bedien- und Anzeigeelemente an einer Kappe (5) des Gehäusekopfes (4) angeordnet sind.

8. Vorrichtung nach einem der Ansprüche 1 bis 7, **dadurch gekennzeichnet, daß** in jede der in der Innenwand des Gehäusekörpers (2) ausgebildeten Ausnehmungen (7) von der zugehörigen Stirnseite aus ein Halter (8) eingesteckt ist, der den zugehörigen Ultraschallwandler (6) aufnimmt.

9. Vorrichtung nach Anspruch 8, **dadurch gekennzeichnet, daß** die Halter (8) aus schallabsorbierendem Material bestehen.

10. Vorrichtung nach einem der Ansprüche 1 bis 9, **dadurch gekennzeichnet, daß** die O-Ringe (12) in Ringnuten (11) der zugehörigen Stirnseiten der Gehäuseanordnung (1) angeordnet sind.

11. Vorrichtung nach einem der Ansprüche 1 bis 10, **dadurch gekennzeichnet, daß** die Flanschscheiben (13) als Strömungsgleichrichter ausgebildet sind.

12. Vorrichtung nach einem der Ansprüche 1 bis 11, **dadurch gekennzeichnet, daß** vier Ultraschallwandler (6), die divergente Strahlenbündel aussenden, paarweise in einer gemeinsamen diagonalen Ebene des Meßrohres spiegelbildlich zueinander angeordnet sind und daß je eine fokussierende funktionale Reflexionsfläche zwischen den Ultraschallwandlern (6) jedes Paares angeordnet ist.

13. Vorrichtung nach Anspruch 12, **dadurch gekennzeichnet, daß** die funktionalen Reflexionsflächen, gesehen im Schnitt senkrecht zur Achse des Meßrohres, jeweils von einer Ellipse begrenzt werden, in deren Brennpunkten die Ausnehmungen (7) für die Ultraschallwandler (6) des zugehörigen Paares liegen.

14. Vorrichtung nach Anspruch 13, **dadurch gekennzeichnet, daß** die funktionalen Reflexionsflächen, gesehen im Schnitt parallel zur Achse des Meßrohres, zusätzlich gekrümmt sind.

15. Gehäuseanordnung (1) für eine Vorrichtung zur Ultraschalldurchflußmessung eines strömenden Fluids, mit einem Gehäusekörper (2), der mit seinen Stirnseiten in eine Fluidleitung einbaubar ist und mit seiner Innenwand ein Meßrohr bildet, wobei die Innenwand des Gehäusekörpers (2) Einrichtungen zur Aufnahme von mindestens zwei Ultraschallwandlern (6) aufweist, die einen Schallpfad definieren, und wobei Öffnungen für Druckdurchführungen (16) vorgesehen sind, durch die hindurch Anschlußleitungen (15) der Ultraschallwandler (6) aus dem Meßrohr herausführbar sind,
**dadurch gekennzeichnet,**
- **daß** die Einrichtungen zur Aufnahme der Ultraschallwandler (6) Ausnehmungen (7) aufweisen, die, ausgehend von den Stirnseiten des Gehäusekörpers (2), in dessen Innenwand angeordnet sind,
- **daß** jede Stirnseite der Gehäuseanordnung (1) für die Anschlußleitungen (15) der Ultraschallwandler (6) mindestens eine Nut (9) aufweist, die die zugehörige Ausnehmung (7) mit einer radial außerhalb des Meßrohrs liegenden, von der zugehörigen Stirnseite ausgehenden Kammer verbindet,
- **daß** die Öffnungen für die Druckdurchführungen (16) aus diesen Kammern herausführen und
- **daß** in jeder Stirnseite der Gehäuseanordnung (1) eine O-Ringnut (11) angeordnet ist, die radial außerhalb der zugehörigen Ausnehmung (7), Nut (9) und Kammer um diese herumläuft.

16. Gehäuseanordnung nach Anspruch 15, **dadurch gekennzeichnet, daß** die von den Stirnseiten der Gehäuseanordnung (1) ausgehenden Kammern in einem Gehäusehals (3) angeordnet sind, an den sich ein Gehäusekopf (4) zur Aufnahme einer Ansteuerungs- und Auswertelektronik anschließt, wobei die Öffnungen für die Druckdurchführungen (16) die Kammern mit dem Gehäusekopf (4) verbinden.

17. Gehäuseanordnung nach Anspruch 15 oder 16, **dadurch gekennzeichnet, daß** die von den Stirnseiten der Gehäuseanordnung (1) ausgehenden Kammern von einem durchgehenden Kanal (10) miteinander verbunden sind.

18. Gehäuseanordnung nach Anspruch 17, **dadurch gekennzeichnet, daß** im Gehäusehals (3) zwischen dem Kanal (10) und dem Gehäusekopf (4) weitere Öffnungen für Druckdurchführungen (17) von Druck- und Temperatursensoren vorgesehen sind.

19. Gehäuseanordnung nach einem der Ansprüche 15 bis 18, **dadurch gekennzeichnet, daß** vier Ausnehmungen (7) für Ultraschallwandler (6) paarweise in einer gemeinsamen diagonalen Ebene des Meßrohres spiegelbildlich zueinander angeordnet sind und daß je eine fokussierende funktionale Reflexionsfläche zwischen den Ultraschallwandlern (6) jedes Paares angeordnet ist.

20. Gehäuseanordnung nach Anspruch 19, **dadurch gekennzeichnet, daß** die funktionalen Reflexionsflächen, gesehen im Schnitt senkrecht zur Achse des Meßrohres, jeweils von einer Ellipse begrenzt werden, in deren Brennpunkten die Ausnehmungen (7) für die Ultraschallwandler (6) des zugehörigen Paares liegen.

21. Gehäuseanordnung nach Anspruch 20, **dadurch gekennzeichnet, daß** die funktionalen Reflexionsflächen, gesehen im Schnitt parallel zur Achse des Meßrohres, zusätzlich gekrümmt sind.

22. Gehäuseanordnung nach einem der Ansprüche 15 bis 21, **dadurch gekennzeichnet, daß** der Gehäusekörper (2), der Gehäusehals (3) und der Gehäusekopf (4) einteilig miteinander ausgebildet sind.

23. Gehäuseanordnung nach Anspruch 22, **dadurch gekennzeichnet, daß** der Gehäusekörper(2), der Gehäusehals (3) und der Gehäusekopf (4) aus Metall, vorzugsweise aus Aluminium bestehen.

24. Gehäuseanordnung nach Anspruch 23, **dadurch gekennzeichnet, daß** der Gehäusekörper (2), der Gehäusehals (3) und der Gehäusekopf (4) im Strangpressverfahren hergestellt sind.

## Claims

1. Device for ultrasonic flow metering of a flowing fluid, i.e. a flowing gas or a flowing liquid, with
- a housing arrangement (1), in which the faces of the housing corpus (2) can be installed in a fluid line and in which the inside wall of the housing corpus (2) forms a measuring tube,
- at least two ultrasonic transducers (6), which are arranged on the inside wall of the housing corpus (2) and which define a sound path leading through the measuring tube, and
- connecting lines (15) for the ultrasonic transducers (6), which are led out of the measuring tube through pressurised passages (16)
**characterised in that**,
- starting from each face, at least one recess (7) for one of the ultrasonic transducers (6) is formed in the inside wall of the housing corpus (2),
- each face of the housing arrangement (1) exhibits at least one groove (9) for the connecting lines (15) of the ultrasonic transducers (6), said groove (9) connecting the appertaining recess (7) to a chamber which starts from the appertaining face and is located radially outside the measuring tube, the appertaining pressurised passage (16) leading out of said chamber, and
- a flange disk (13) covering the appertaining recess (7), groove (9) and chamber is fixed to each face of the housing arrangement (1), an O-ring (12) being arranged between each flange disk (13) and the appertaining face and running radially around the appertaining recess (7), groove (9) and chamber.

2. Device according to claim 1, **characterised in that** the chambers starting from the faces of the housing arrangement (1) are arranged in a housing neck (3) to which a housing head (4) adjoins, the pressurised passages (16) being arranged in the housing neck (3) between the chambers and the housing head (4).

3. Device according to claim 1 or 2, **characterised in that** the chambers starting from the faces of the housing arrangement (1) are connected to each other by a duct (10).

4. Device according to claim 3, **characterised in that** further pressurised passages (17) for pressure and temperature sensors are arranged in the housing neck (3) between the duct (10) and the housing head (4).

5. Device according to any one of claims 2 through 4, **characterised in that** control and evaluation electronics are arranged in the housing head (4).

6. Device according to claim 5, **characterised in that** both interfaces (18) and operating and display elements are assigned to the housing head (4).

7. Device according to claim 6, **characterised in that** the interfaces (18) and the operating and display elements are arranged on a cap (5) of the housing head (4).

8. Device according to any one of claims 1 through 7, **characterised in that** from the appertaining face a mounting (8) is inserted in each of the recesses (7) formed in the inside wall of the housing corpus (2) and that the mounting (8) accommodates the appertaining ultrasonic transducer (6).

9. Device according to claim 8, **characterised in that** the mountings (8) are made of sound-absorbing material.

10. Device according to any one of claims 1 through 9, **characterised in that** the O-rings (12) are arranged in ring grooves (11) of the appertaining faces of the housing arrangement (1).

11. Device according to any one of claims 1 through 10, **characterised in that** the flange disks (13) are designed as flow straighteners.

12. Device according to any one of claims 1 through 11, **characterised in that** four ultrasonic transducers (6) which transmit divergent beams are arranged in pairs in a common diagonal plane of the measuring tube mirror-inverse to each other and that a focusing functional reflection surface is arranged between the ultrasonic transducers (6) of each pair.

13. Device according to claim 12, **characterised in that** the functional reflection surfaces, as seen in the section vertical to the axis of the measuring tube, are each limited by an ellipsis in whose focal points the recesses (7) for the ultrasonic transducers (6) of the appertaining pair are located.

14. Device according to claim 13, **characterised in that** the functional reflection surfaces, as seen in the section parallel to the axis of the measuring tube, are also curved.

15. Housing arrangement (1) for a device for the ultrasonic flow metering of a flowing fluid, with a housing corpus (2), whose faces can be installed in a fluid line and whose inside wall forms a measuring tube, the inside wall of the housing corpus (2) exhibiting facilities for accommodating at least two ultrasonic transducers (6) which define a sound path and wherein openings for pressurised passages (16) are provided through which connecting lines (15) of the ultrasonic transducers (6) can be passed out of the measuring tube,
**characterised in that**
- the facilities for accommodating the ultrasonic transducers (6) exhibit recesses (7) which, starting from the faces of the housing corpus (2), are arranged in the inside wall of said housing corpus,
- each face of the housing arrangement (1) exhibits at least one groove (9) for the connecting lines (15) of the ultrasonic transducers (6), said groove (9) connecting the appertaining recess (7) to a chamber which starts from the appertaining face and is located radially outside the measuring tube
- the opening for the pressurised passage (16) leads out of said chamber, and
- an O-ring groove (11) is arranged in each face of the housing arrangement (1), said O-ring groove running radially around the appertaining recess (7), groove (9) and chamber.

16. Housing arrangement according to claim 15, **characterised in that in that** the chambers starting from the faces of the housing arrangement (1) are arranged in a housing neck (3) to which a housing head (4) for the accommodation of control and evaluation electronics adjoins, the openings for the pressurised passages (16) connecting the chambers with the housing head (4).

17. Housing arrangement according to claim 15 or 16, **characterised in that** the chambers starting from the faces of the housing arrangement (1) are connected to each other by a duct (10).

18. Housing arrangement according to claim 17, **characterised in that** further openings for pressurised passages (17) for pressure and temperature sensors are provided in the housing neck (3) between the duct (10) and the housing head (4).

19. Housing arrangement according to any one of claims 15 through 18, **characterised in that** four recesses (7) ultrasonic transducers (6) are arranged in pairs in a common diagonal plane of the measuring tube mirror-inverse to each other and that a focusing functional reflection surface is arranged between the ultrasonic transducers (6) of each pair.

20. Housing arrangement according to claim 19, **characterised in that** the functional reflection surfaces, as seen in the section vertical to the axis of the measuring tube, are each limited by an ellipsis in whose focal points the recesses (7) for the ultrasonic transducers (6) of the appertaining pair are located.

21. Housing arrangement according to claim 20, **characterised in that** the functional reflection surfaces, as seen in the section parallel to the axis of the measuring tube, are also curved.

22. Housing arrangement according to any one of claims 15 through 21, **characterised in that** the housing corpus (2), the housing neck (3) and the housing head (4) are designed as one part.

23. Housing arrangement according to claim 22, **characterised in that** the housing corpus (2), the housing neck (3) and the housing head (4) consist of metal, preferably of aluminium.

24. Housing arrangement according to claim 23, **characterised in that** the housing corpus (2), the housing neck (3) and the housing head (4) are extrusion moulded.

## Revendications

1. Dispositif pour le comptage ultrasonore du débit d'un fluide en écoulement, c'est-à-dire d'un gaz ou d'un liquide en écoulement, avec
- une configuration d'enveloppe (1), dont le corps d'enveloppe (2) peut être monté, avec ses parties frontales, dans une conduite de fluide, et qui forme, avec sa paroi intérieure, un tube de mesurage,
- au moins deux transformateurs d'ultrasons (6), disposés à la paroi intérieure du corps d'enveloppe (2) et définissant un chemin de son traversant le tube de mesurage, et
- des conduites de raccordement (15) pour les transformateurs d'ultrasons (6), sortant du tube de mesurage en passant à travers de passages de pression (16),
**caractérisé par le fait**
- **que** dans la paroi intérieure du corps d'enveloppe (2), en partant de chaque partie frontale, est formé au moins un creux (7) pour l'un des transformateurs d'ultrasons (6),
- **que** chaque partie frontale de la configuration d'enveloppe (1) présente au moins une rainure (9) pour les conduites de raccordement (15) des transformateurs d'ultrasons (6), liant le creux correspondant (7) à une chambre, située de façon radiale à l'extérieur du tube de mesurage et partant de la partie frontale correspondante, de laquelle sort le passage de pression correspondant (16), et
- **qu'**à chaque partie frontale de la configuration d'enveloppe (1) est fixée une plaque de bride (13) couvrant le creux (7), la rainure (9) et la chambre correspondants, où, entre chaque plaque de bride (13) et la partie frontale correspondante est disposé un joint torique (12) faisant le tour de cette partie frontale de façon radiale à l'extérieur du creux (7), de la rainure (9) et de la chambre correspondants.

2. Dispositif suivant la revendication 1, **caractérisé par le fait que** les chambres partant des parties frontales de la configuration d'enveloppe (1) sont disposées dans un col d'enveloppe (3), suivi d'une tête d'enveloppe (4), où les passages de pression (16) dans le col d'enveloppe (3) sont disposés entre les chambres et la tête d'enveloppe (4).

3. Dispositif suivant la revendication 1 ou 2, **caractérisé par le fait que** les chambres partant des parties frontales de la configuration d'enveloppe (1) sont reliées l'une à l'autre par un canal continu (10).

4. Dispositif suivant la revendication 3, **caractérisé par le fait que** dans le col d'enveloppe (3) sont disposés, entre le canal (10) et la tête d'enveloppe (4), d'autres passages de pression (17) pour des capteurs de pression et de température.

5. Dispositif suivant l'une des revendications 2 à 4, **caractérisé par le fait que** dans la tête d'enveloppe est disposé un système électronique d'amorçage et de dépouillement.

6. Dispositif suivant la revendication 5, **caractérisé par le fait qu'**à la tête d'enveloppe (4) sont attribuées des interfaces (18) ainsi que des éléments de commande et d'affichage.

7. Dispositif suivant la revendication 6, **caractérisé par le fait que** les interfaces (18) ainsi que les éléments de commande et d'affichage sont disposés à un clapet (5) de la tête d'enveloppe (4).

8. Dispositif suivant l'une des revendications 1 à 7, **caractérisé par le fait que** dans chaque creux (7) formé dans la paroi intérieur du corps d'enveloppe (2) est insérée, en partant de la partie frontale correspondante, une attache (8) qui reçoit le transformateur d'ultrasons correspondant (6).

9. Dispositif suivant la revendication 8, **caractérisé par le fait que** les attaches (8) consiste en un matériau absorbant le son.

10. Dispositif suivant l'une des revendications 1 à 9, **caractérisé par le fait que** les joints toriques (12) sont disposés dans des rainures annulaires (11) des parties frontales correspondantes de la configuration d'enveloppe (1).

11. Dispositif suivant l'une des revendications 1 à 10, **caractérisé par le fait que** les plaques de bride (13) sont conçues sous forme de tranquilliseurs.

12. Dispositif suivant l'une des revendications 1 à 11, **caractérisé par le fait que** quatre transformateurs d'ultrasons (6), émettant des faisceaux de rayons divergents, sont disposés par paires et de façon réfléchie sur un plan diagonal commun du tube de mesurage, et que, entre les transformateurs d'ultrasons (6) de chaque paire, est disposé à chaque fois une surface de réflexion fonctionnelle focalisante.

13. Dispositif suivant la revendication 12, **caractérisé par le fait que** les surfaces de réflexion fonctionnelles, vues en coupe perpendiculairement à l'axe du tube de mesurage, sont délimitées à chaque fois par une ellipse, dans les foyers de laquelle sont situés les creux (7) pour les transformateurs d'ultrasons (6).

14. Dispositif suivant la revendication 13, **caractérisé par le fait que** les surfaces de réflexion fonctionnelles, vues en coupe en parallèle à l'axe du tube de mesurage, sont de plus courbes.

15. Configuration d'enveloppe (1) pour un dispositif pour le comptage ultrasonore du débit d'un fluide en écoulement, avec un corps d'enveloppe (2) qui peut être monté, avec ses parties frontales, dans une conduite de fluide, et qui forme, avec sa paroi intérieure, un tube de mesurage, où la paroi intérieure du corps d'enveloppe (2) présente des dispositifs pour recevoir au moins deux transformateurs d'ultrasons (6) définissant un chemin de son, et où sont prévues des ouvertures pour de passages de pression (16), à travers desquels des conduites de raccordement (15) des transformateurs d'ultrasons (6) peuvent être sorties du tube de mesurage,
**caractérisée par le fait**
- **que** les dispositifs pour recevoir les transformateurs d'ultrasons (6) présentent des creux (7) qui, partant des parties frontales du corps d'enveloppe (2), sont disposés dans la paroi intérieure de celui-ci,
- **que** chaque partie frontale de la configuration d'enveloppe (1) présente, pour les conduites de raccordement (15) des transformateurs d'ultrasons (6), au moins une rainure (9) liant le creux correspondant (7) à une chambre, située de façon radiale à l'extérieur du tube de mesurage et partant de la partie frontale correspondante,
- **que** les ouvertures pour les passages de pression (16) sortent desdites chambres, et
- **que** dans chaque partie frontale de la configuration d'enveloppe (1) est disposé une rainure annulaire torique (11) faisant le tour de cette partie frontale de façon radiale à l'extérieur du creux (7), de la rainure (9) et de la chambre correspondants.

16. Configuration d'enveloppe suivant la revendication 15, **caractérisée par le fait que** les chambres partant des parties frontales de la configuration d'enveloppe (1) sont disposées dans un col d'enveloppe (3), suivi d'une tête d'enveloppe (4) pour recevoir un système électronique d'amorçage et de dépouillement, où les ouvertures pour les passage de pression (16) relient les chambres à la tête d'enveloppe (4).

17. Configuration d'enveloppe suivant la revendication 15 ou 16, **caractérisée par le fait que** les chambres partant des parties frontales de la configuration d'enveloppe (1) sont reliées l'une à l'autre par un canal continu (10).

18. Configuration d'enveloppe suivant la revendication 17, **caractérisée par le fait que** dans le col d'enveloppe (3) sont prévus, entre le canal (10) et la tête d'enveloppe (4), d'autres passages de pression (17) pour des capteurs de pression et de température.

19. Configuration d'enveloppe suivant l'une des revendications 15 à 18, **caractérisée par le fait que** quatre creux (7) pour transformateurs d'ultrasons (6) sont disposés par paires et de façon réfléchie sur un plan diagonal commun du tube de mesurage, et que, entre les transformateurs d'ultrasons (6) de chaque paire, est disposé à chaque fois une surface de réflexion fonctionnelle focalisante.

20. Configuration d'enveloppe suivant la revendication 19, **caractérisée par le fait que** les surfaces de réflexion fonctionnelles, vues en coupe perpendiculairement à l'axe du tube de mesurage, sont délimitées à chaque fois par une ellipse, dans les foyers de laquelle sont situés les creux (7) pour les transformateurs d'ultrasons (6) de la paire correspondante.

21. Configuration d'enveloppe suivant la revendication 20, **caractérisée par le fait que** les surfaces de réflexion fonctionnelles, vues en coupe en parallèle à l'axe du tube de mesurage, sont de plus courbes.

22. Configuration d'enveloppe suivant l'une des revendications 15 à 21, **caractérisée par le fait que** le corps d'enveloppe (2), le col d'enveloppe (3) et la tête d'enveloppe (4) sont conçus pour former une seule pièce.

23. Configuration d'enveloppe suivant la revendication 23, **caractérisée par le fait que** le corps d'enveloppe (2), le col d'enveloppe (3) et la tête d'enveloppe (4) consistent en métal, de préférence en aluminium.

24. Configuration d'enveloppe suivant la revendication 23, **caractérisée par le fait que** le corps d'enveloppe (2), le col d'enveloppe (3) et la tête d'enveloppe (4) sont fabriqués par le procédé de coulée continue.
